# EUROPEAN PATENT SPECIFICATION

(11) **EP 1 758 941 B1**
(45) Date of publication and mention of the grant of the patent: **09.12.2009**
(21) Application number: 04793553.1
(22) Date of filing: 21.10.2004
(51) Int. Cl.: C08F 4/642, C08F 4/64, B01J 31/00

(54) **HIGH ACTIVITY OLEFIN POLYMERIZATION SILICA SUPPORTED CATALYST**
HOCHWIRKSAMER SILICIUMDIOXIDGETRÄGERTER OLEFINPOLYMERISATIONSKATALYSATOR
CATALYSEUR A SUPPORT DE SILICE POUR UNE POLYMERISATION OLEFINIQUE A HAUTE ACTIVITE

(30) Priority: 23.10.2003 KR 2003074049
(43) Date of publication of application: 07.03.2007
(73) Proprietor: HANWHA CHEMICAL CORPORATION, Seoul 100-797 (KR)
(72) Inventor: Kim, Myoung-Un, Yuseong-Gu, Daejeon 305-720 (KR); Kim, Jin-Dong, Yuseong-Gu, Daejeon 305-720 (KR); Na, Yong-Hwan, Nam-Gu, Incheon 420-020 (KR)
(74) Representative: Albrecht, Thomas
(86) International application number: PCT/KR2004/002695
(87) International publication number: WO 2005/040231

(56) References cited:
- EP-A1- 1 102 633
- US-A- 5 143 883
- US-A- 5 914 408
- US-A- 6 051 525
- US-A1- 2002 103 311
- US-B1- 6 399 531

## Description

### Technical Field

The present invention is related to a method of manufacture of high-activity silica-impregnated polymerization catalysts, with which ethylene singly or alpha-olefin copolymers may be manufactured. The present invention is also to provide with high-activity silica-impregnated catalysts manufactured according to the above new method of manufacture. In more detail, the present invention is related to new polymerization catalysts having superior catalytic activities and a method of manufacture thereof through the impregnation and activation of titanium-group Ziegler-Natta catalytic components into a spherical silica support.

Another object of the present invention is to develop technologies for providing with new high-activity silica-impregnated Ziegler-Natta catalysts while enhancing advantages of silica-impregnated catalysts by providing with a new method of impregnation of silica supports as well as impregnation and activation of titanium compounds which are catalytic components so that polymerization catalysts showing high catalytic activities are manufactured even by using silica supports.

### Background Art

The conventional polyethylene polymerization catalysts are largely classified into Ziegler-Natta catalysts, chrome-group catalysts,, and metalloccne-group catalysts according to the central metal used and catalytic properties. These catalysts are used selectively according to the process of manufacturing of polyethylene since catalytic activities, molecular weight distribution of polymers, and inclusion characteristic of copolymers are different.

Chrome-group catalysts are silica-impregnated catalysts and are characterized by having a wide molecular weight distribution, but are disadvantageous in that catalytic activities are low to the degree of 5,000 g-PE/g-catalyst in the commercial scale. Ziegler-Natta catalysts may be largely classified into silica-impregnated catalysts and magnesium-impregnated catalysts according to the kind of a support: silica-impregnated catalysts are disadvantageous in that catalytic activities are low to the degree of 5,000 g-PE/g-catalyst in the commercial scale, but are proper for the gas-phase flowing-layer process in which the flowing characteristic is very critical since the shape of polymers produced is spherical; while magnesium-impregnated catalysts are not proper for the gas-phase flowing-layer process since magnesium supports used such as magnesium chloride, magnesium ethoxide, etc. may be broken easily, and it is difficult to maintain a spherical form for the shape of polymers produced although it is possible to manufacture high-activity catalysts having the catalytic activity of greater than 30,000 g-PE/g-catalyst in the commercialized process. In order to supplement such disadvantage of high-activity magnesium-impregnated catalysts, technologies of maintaining the morphology of impregnated catalysts have been developed through the introduction of processes in which there are preliminary polymerization steps. However, these have been disadvantageous in that a large amount of facility investment has been required since special facilities performing preliminary polymerization steps have to be installed in the manufacturing processes.

Up to the present time, a series of many attempts to improve the above-described problems has been performed by the researchers in this technical field, but most of them is for the improvement of magnesium-impregnated catalysts, and nothing has been reported in relation to attempts for high activation of silica-impregnated catalysts.

### Disclosure of Invention

As a result of study for the achievement of the above-described objects, new Ziegler-Natta catalysts according to the present invention are manufactured according to a method comprising the steps of
(1) modification of the surface of silica used for a support;
(2) impregnation of a magnesium dihalide into the above silica;
(3) impregnation of the primary titanium compound;
(4) activation by processing with an alkyl aluminoxane; and
(5) impregnation and activation of the secondary titanium compound, thus enabling the development of new high-activity silica-impregnated catalysts.

Particularly, in the manufacture of polymerization catalysts of the present invention, in order to produce titanium activation sites converted into activation species on a unit silica support to the maximum, firstly, a titanium compound is impregnated into a silica support, into which a magnesium dihalide is impregnated, and activated to an alkyl aluminum thus producing activation sites primarily on the inner surface of pores of the silica support, and then the second titanium compound, which is different from the primary titanium compound, is impregnated in order to produce titanium sites secondarily on the surface of the silica support formed newly through the impregnation of the alkyl aluminoxane. Therefore, the present invention is technically characterized by having a series of manufacturing steps described in the above for the maximization of titanium activation sites, i.e., the combination of the steps of impregnation connected to the above steps.

Another technical characteristic of the present invention is how to select the kind of a solvent in each step of impregnation in that the kind of a solvent used in each step of impregnation has a great affect on the solubility of the impregnated metal compound according to the kind of the solvent before and after the step of impregnation, and therefore, is very important.

In olefin polymerization catalysts of the present invention, any of porous silicas having minute pores on the surface and a large surface area may be used for a silica support. In order to increase catalytic activities, preferably, the surface area should be greater than 100 m²/g and the pore volume should be greater than 1.0 cc/g, more preferably, the surface area should be greater than 300 m²/g and the pore volume should be 1.5 cc/g. As to the size of silica particles, a size to the degree of 1 to 30 microns is used usually. If it is less than 1 micron, it is difficult to handle the silica, and it is difficult to obtain desired high-activity catalysts if it is greater than 30 microns. Usually, silicas that are commercialized and sold in the corresponding field are used in the present invention.

Generally, in order to use the above-described silica supports for the supports of polymerization catalysts, hydroxyl radicals are treated chemically or physically since they include hydroxyl radicals on their surfaces. In order for the silica supports to be used for polymerization catalysts, they should be treated chemically at all times with the compounds such as an aluminum alkyl, alkyl magnesium halide, chlorotrimethylsilane, trichloroborane, etc., according to a general method of processing of polymerization catalysts. In the impregnation of a magnesium dihalide on a silica support, of which surface is modified, it is preferable that the amount of impregnation is 0.1 to 10 mmole/g, more preferably, 1.0 to 5.0 mmole/g. Various methods have been known for the methods of impregnation of magnesium dichloride. Among them, there are a direct method of impregnation of magnesium chloride into alcohols such as ethanol, etc. or ethers such as tetrahydrofuran, etc. (direct method) and a method of impregnation of an alkyl magnesium chloride solution (RMgCl), treating it with a Lewis acid such as tetrachlorosilane, boron chloride, etc., and converting it into magnesium chloride (indirect method), where any of them is acceptable. Surface treatment of silicas and precursors impregnated with magnesium chloride are described in detail in Korean Patent No. 2003-72532 (dated October 17, 2003) applied by the inventors of the present invention. Therefore, they may be manufactured and used according to the method in the above patent, or commercialized products may be purchased and used, as needed.

After the precursor described in the above is manufactured or purchased, a titanium compound is impregnated primarily. In the primary impregnation of a titanium compound, it is preferable to use one which is not soluble in aromatic hydrocarbon solvents such as toluene, etc. or has a very low solubility (difficult to be dissolved). A typical non-soluble or insoluble titanium compound is titanium trichloride, for which methylene chloride or tetrahydrofuran is used for a solvent. The titanium compound impregnated here is not limited specially as long as it is within a range used generally in the corresponding field. However, it is generally preferable that the titanium component is in a range between 0.1 mmole/g to 1.0 mmole/g based on the mole ratio of silica, more preferably, 0.2 mmole/g to 0.5 mmole/g. If it is less than 0.1 mmole/g, it is difficult to obtain high-activity catalysts; and if it is greater than 1.0 mmole/g, it is not necessary to use the titanium compound any more since it is saturated in the precursor, or a part of it is supersaturated having negative affects on the performance of catalysts on the contrary.

In the next step, in order to provide with the primary activation sites, precursors into which titanium trichloride is impregnated are pre-processed with an aluminum alkyl compound. The aluminum alkyl compound used here should be at all times an alkyl aluminoxane which is very soluble in aromatic hydrocarbon solvents such as toluene, etc., but non-soluble or insoluble in aliphatic hydrocarbon solvents such as hexane, pentane, etc. The above alkyl aluminoxane compound may be used singly or in combination with others. Typical examples of the above alkyl aluminoxane include methylaluminoxane (MAO), ethylaluminoxane (EAO), etc., that are further divided into chain-type aluminoxane shown in terms of the following Chemical Formula 1a and ring-type aluminoxane shown in terms of the following Chemical Formula 1b. Preferably, it is advantageous to use ring-type aluminoxane having a structure shown in Chemical Formula 1b in view of the solubility in hydrocarbon solvents.

[Chemical Formula 1a] R₂Al-O(-AI(R)-O)n-AlR₂

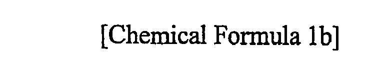

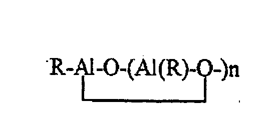

where R is an alkyl radical having 1 to 8 carbon atoms, and n is an integer between 1 and 100.

However, as pointed out in the above, the compounds shown in the above Chemical Formula 1a or 1b which are very soluble in aromatic hydrocarbons such as toluene, etc. but insoluble or non-soluble in aliphatic hydrocarbons such as hexane, pentane, etc. should be used in the present invention at all times since there occurs a difference in solubility due to the difference in molecular weight, structure, or composition although they have a structure shown in Chemical Formula 1a or 1b.

The amount of use of the above aluminoxane during the process of treatment in a silica support, into which a magnesium dihalide and titanium trichloride are impregnated, may be in a range between 1.0 to 100 mole ratio in terms of the Al/Mg ratio, preferably, in a range between 3.0 to 10. If it is less than 1.0, it is not possible to manufacture high-activity catalysts; and if it is greater than 100, the alkyl aluminoxane has no significance or negative affects on its physical properties since it is costly and supersaturated excessively.

In order to complete the manufacture of high-activity polymerization catalysts of the present invention, double-layered active sites should be produced through the manufacture of silica precursors having titanium active sites primarily by processing the above aluminoxane and the process of impregnation of the secondary titanium compound in order to provide with the secondary activation sites again. The titanium compounds used here should be at all times those that are soluble in hydrocarbon solvents such as pentane, isopentane, hexane, heptane, etc. having a structure shown in the following Chemical Formula 2, for example, tetrachlorotitanium, tetraethoxytitanium, tetramethoxytitanium, tetraisopropoxytitanium, chlorotriethoxytitanium, chlorotrimethoxytitanium, dichlorodimethoxytitanium, dichlorodiethoxytitanium, dichlorodiisoproxytitanium, dichlorodibuthoxytitanium, trichloromethoxytitanium, trichloroethoxytitanium, etc.:

[Chemical Formula 2] (RO)ₙTiX(₄₋ₙ)

where R is a hydrocarbon having 1 to 20 carbon atoms, X is Cl, Br, I, or a pseudohalide, and n is an integer between 0 and 4. If any of aromatic hydrocarbons such as toluene, etc. is used for a solvent, it is difficult to manufacture high-activity catalysts to be achieved in the present invention since the number of activation sites is reduced practically as the alkyl aluminoxane forming the primary activation sites is dissolved.

It is preferable to use hexane or heptane for a solvent used in the process of impregnation of the above titanium compound into silica precursors in which aluminoxane is treated, and it is preferable to use a 0.1 to 1.0 mole solution, more preferably, a 0.2 to 0.5 mole solution, since the titanium compound and aluminoxane go through a chemically exothermic reaction.

The amount of the secondary titanium compound to be impregnated is not greatly affected by its content, but it is preferable that it is in a range of 0.1 mmole/g-silica to 2.0 minole/g-silica. If it is less than 0.1 mmole/g, it is difficult to obtain high-activity catalysts to be achieved in the present invention since the number of activation sites is excessively small; and if it is greater than 2.0 mmole/g, it is not necessary to use a titanium compound since it is already saturated, and it may rather have negative affects on catalytic activities since it is supersaturated.

In the process of impregnation of a titanium compound, it is better to lower the initial temperature since aluminoxane and the titanium compound have a chemical reaction and heat is generated. It is preferable that it is -20 to 50°C, more preferably, 0 to 20°C.

The polymerization of compounds using the catalysts of the present invention may be performed in the slurry phase, liquid phase, gas phase, or bulk phase. If the polymerization is performed in the liquid or slurry phase, it is possible to use the solvent or olefin itself as a medium, where the olefin may be used singly or in combination with two or more kinds of olefins. Examples of the solvents to be used include butane, pentane, hexane, heptane, octane, cyclopentane, cyclohexane, etc., where they may be mixed at a fixed ratio before being used.

Olefins used for the copolymers of the present invention include C₃₋₂₀-alphaolefins such as propylene, 1-butene, 1-pentene, 1-hexene, 1-octene, etc., where they may be used singly or mixed for polymerization.

In the polymerization of olefins using the catalyst of the present invention, the polymerization temperature is not limited specially. However, it should be 0 to 200°C, preferably 50 to 150°C. Polymerization is done in the batch, semi-continuous, or continuous method at a pressure of 1.0 to 100 atmosphere usually, preferably, 2.0 to 30 atmosphere.

The foregoing and other objects, aspects, and advantages will be better understood from the following detailed description of manufacturing examples and preferred embodiments:

### [Manufacturing Example 1] Manufacture of impregnation catalysts

In order to manufacture high-activity catalysts of the present invention, preferred embodiments described in Korean Patent Application No. 21003-72532 applied previously by the inventors of the present invention for processing of the surface of silica supports and processing them with magnesium chloride are used. For the sake of convenience, in the present invention, Sylopol 5510 silica (average particle size of 12 µm, rate of impregnation of magnesium dichloride of 2 mmole/g-silica) of Grace Davidson Company, in which the surface of silica supports is processed and they are impregnated with magnesium dichloride, is purchased and used.

### A) Impregnation of the primary titanium compound

Into a Schlenk flask, 462 mg of titanium trichloride is put, and then 30 ml of methylene chloride. The mixture is stirred in the slurry state, and 3 ml of tetrahydrofuran is injected through a syringe, and stirred for 2 hours in order to obtain a green solution in which titanium chloride is dissolved completely.

Next, 10 g of Sylopol 5510 is put into another flask, and then, the above green titanium trichloride solution is added, and stirred for 2 hours. Then the solvent is removed completely at 30°C in vacuum in order to obtain a fluidal powder of the primary titanium-impregnated catalyst precursors.

### B) Impregnation of methylaluminoxane

To the catalyst precursors powder in the above A), 30 ml of a methylaluminoxane solution (P-MAO, 9.5 wt% Al, AKZO product) in toluene is added at 20°C, mixed for 1 hour, and vacuum-dried at 50°C to remove the solvent completely in order to obtain a fluidal powder of catalyst precursors in which the primary activation sites are formed.

### C) Impregnation of the secondary titanium compound

To the above catalyst precursor in B), 30 ml of a 0.5 mole titanium chloride solution (TiCl₄) in hexane is added at 0°C, and mixed at a room temperature for 1 hour in order to obtain a red-brown slurry. This red-brown slurry is filtered, washed twice with each 30 ml of hexane, and vacuum-dried in order to obtain a red-brown fluidal powdery catalyst.

### [Manufacturing Example 2]

The same method of manufacture of catalysts as that of Preferred Embodiment 1 is used except for the use of a 0.2 mole solution instead of a 0.5 mole titanium chloride solution in Step C) of Preferred Embodiment 1.

### [Manufacturing Example 3]

### A) Modification of silica surface

The same method of manufacture as that of Preferred Embodiment 1 is used except for the use of Silica XPO-2412 of Grace Davidson Company (average particle diameter of 20 µm, surface area of 475 m²/g, pore volume of 1.54 cc/g) instead of Sylopol 5510 of Grace Davidson Company in which the surface of silica supports is processed and impregnated with magnesium chloride, modification of the surface, and impregnation with magnesium chloride as shown below:

In a 2-liter flask, 100 g of silica (Grace Davidson Company, XPO-2412) is filled. It is then heated to 200°C by using a mantle, vacuum-dried for 5 hours using a vacuum pump, and cooled slowly to a room temperature. 50 g of dehydrated silica is put into a 500-ml flask, and 100 ml of a 1.0 mole ethylmagnesium chloride solution in tetrahydrofuran is added slowly for 30 minutes at 0°C and mixed for 2 more hours. Mixing-sliould be done while removing the gas generated since an exothermic reaction occurs and ethane gas is generated. The slurry reacted completely is filtered, unreacted ethylmagnesium chloride compound is removed by washing it with 100 ml of the tetrahydrofuran solvent twice, and the product is vacuum-dried at 50°C until it becomes a fluidal powder.

### B) Impregnation of magnesium dichloride

To a 500-ml Schlenk flask, 10 g of the silica, of which hydroxyl radical (-OH) on its surface is modified with magnesium chloride (MgCl₂), is put into, 30 ml of a 1.0 mole magnesium chloride solution in ethanol is added while mixing and mixed for 2 hours, then the mixture is filtered by using a filter cannula in order to remove the excessive amount of ethanol solution, washed once more with 30 ml of ethanol, vacuum-dried at 50°C for 1 hour, and vacuum-dried further for 1 more hour at 100°C in order to obtain a white fluidal powder.

### [Comparative Manufacturing Example 1]

The same method of manufacture of catalysts as that of Preferred Embodiment 1 is used except for the use of Sylopol 5550 (average particle size of 50 microns, amount of impregnation of magnesium dichloride of 2 mmole/g-silica) instead of Sylopol 5510 in Preferred Embodiment 1.

### [Comparative Manufacturing Example 2]

The same method of manufacture as that of Preferred Embodiment 1 is used except for the use of 30 ml of a 1.0 mole triethylaluminum solution in hexane instead of methylaluminoxane in Step B) of Preferred Embodiment 1.

### [Comparative Manufacturing Example 3]

The same method of manufacture as that of Preferred Embodiment 1 is used except for the use of 30 ml of a 1.0 mole triethylaluminum solution in hexane instead of methylaluminoxane in Step B) of Preferred Embodiment 1.

### [Comparative Manufacturing Example 4]

The same method of manufacture as that in Preferred Embodiment 1 is used except that Step C) in Preferred Embodiment 1 is omitted.

### [Comparative Manufacturing Example 5]

Only Steps B) and C) of Preferred Embodiment 1 are performed in the same method omitting Step A) of Preferred Embodiment 1.

### [Comparative Manufacturing Example 6]

The same method of manufacture as that in Comparative Manufacturing Example 5 is used except for the use of 30 ml of a 1.0 mole titanium solution (TiCl₄) in hexane instead of a 0.5 mole solution in Step C).

### [Comparative Manufacturing Example 7]

Catalysts are manufactured in a method published in the U.S. Patent Gazette No. 4302565 related to commercial catalysts used in the conventional gas-phase flowing-layer process of the catalysts of the present invention. It is known that the catalytic activity in a commercial reactor is about 5,000 g-PE/g-catalyst if the above catalysts are used.

### [Preferred Embodiments 1-3] Evaluation of characteristics of ethylene-polymerization

In order to evaluate characteristics of ethylene polymerization catalysts manufactured in the above Preferred Embodiments 1 through 3, slurry polymerization experiments are performed by using each catalyst in a 2-liter polymerization reactor. Polymerization experiments are performed under the same conditions for each of the above catalysts except for the use of different kinds of catalysts. Those conditions include 30 mg for the amount of use of a catalyst, 800 ml of heptane for a polymerization medium, 85°C of a polymerization temperature, 8.5 atmosphere for the partial ethylene pressure, 1.5 atmosphere for the partial hydrogen pressure, 10 ml of 1-hexene for a copolymer; 2 ml of a 1.0 mole triethylaluminum solution (TEAL) in hexane for a cocatalyst, and 30 minutes for the time of polymerization. Catalytic activities are compared by measuring the weight of polymers obtained after finishing polymerization, and molecular weight distribution characteristics are compared and evaluated by measuring MI (melt index) and MFR (melt flow ratio) as shown in the following Table 1:

### [Comparative Examples 1 - 7] Evaluation of characteristics of ethylene polymerization

Polymerization is performed in the same method as those in the above preferred embodiments except that slurry polymerization experiments of each catalyst are performed in a 2-liter polymerization reactor in order to evaluate characteristics of ethylene polymerization catalysts manufactured in the above Comparative Manufacturing Examples 1 through 7. The results are shown in the following Table 1:

**Table 1. Evaluation of characteristics of polyethylene polymerization according to the steps of manufacture and components of catalysts**

| | Catalyst | Catalytic activity | MI | MFR |
|---|---|---|---|---|
| | | (g-PE/g-catalyst, hr) | (g/10 min) | (I₂₁/I₂) |
| Preferred Embodiment 1 | Manufacturing Example 1) | 9800 | 0.36 | 34 |
| Preferred Embodiment 2 | Manufacturing Example 2) | 7500 | 0.32 | 33 |
| Preferred Embodiment 3 | Manufacturing Example 3) | 8200 | 0.33 | 34 |
| Comparative Example 1 | Comparative Manufacturing Example 1) | 1500 | 0.41 | 33 |
| Comparative Example 2 | Comparative Manufacturing Example 2) | 470 | 0.45 | 30 |
| Comparative Example 3 | Comparative Manufacturing Example 3) | 350 | 0.32 | 29 |
| Comparative Example 4 | Comparative Manufacturing Example 4) | 5700 | 0.37 | 29 |
| Comparative Example 5 | Comparative Manufacturing Example 5) | 5100 | 0.47 | 42 |
| Comparative Example 6 | Comparative Manufacturing Example 6) | 3500 | 0.45 | 39 |
| Comparative Example 7 | Comparative Manufacturing Example 7) | 1200 | 0.39 | 32 |

It is seen from the results of the above experiments that, in case of Preferred Embodiments 1 through 3 in which the primary activation sites and the secondary activation sites are produced by going through manufacturing steps of the present invention, very superior high-activity characteristics are shown irrespective to the content of each catalyst in using the usual contents of components comprising each catalyst, and it is recommended to adjust the size of a silica to be less than 50 microns, preferably, less than 30 microns, since the greater the size of a silica, the lower the activity.

Particularly, it is seen that high-activity characteristics become inferior if the primary activation sites are not produced, i.e., if the primary titanium compounds are not impregnated. It is also seen that, if an excessive amount of a titanium compound is used in order to make activation sites (refer to Comparative Example 6), the activity is lowered rather due to the saturation of those activation sites and extreme conditional changes such as exothermic reactions, etc. Moreover, in case that the catalysts manufactured in the same process as that of the conventional commercialized products are used, it is seen that new catalysts of the present invention are highly active in view of that they have an activity of 1,200 g-polyethylene/g-catalyst in the laboratory-scale synthesis using them although they have an activity of 5,000 g-polyethylene/g-catalyst under commercial operation conditions. From the result that such high activity may not be obtained without the successive order of manufacture and successive process of impregnation of compositional components of catalyst of the present invention, it is found by the inventors of the present invention that the catalysts and methods of manufacture thereof according to the present invention have very remarkable affects.

Therefore, the steps of manufacture of the catalysts, components of the catalysts used in each step, and technical selection of a solvent used in each step of impregnation adopted in the present invention are very critical in and characteristic of the present invention.

### Industrial Applicability

Accordingly, the present invention is to provide with new methods of manufacture of high-activity silica-impregnated polyolefin polymerization catalysts and new catalysts manufactured according to those methods, and subsequently, new high-activity silica-impregnated Ziegler-Natta catalysts. It is seen that these catalysts have various effects described in the detailed illustration of the present invention such as cost reduction of high-value-added catalysts, etc.

While the invention has been described in terms of a few manufacturing examples and preferred embodiments, those skilled in the art will recognize that the invention can be practiced with modification within the spirit and scope of the appended claims.

## Claims

1. A method of manufacture of silica-impregnated olefin polymerization Ziegler-Natta catalysts comprising the successive steps of:
i) manufacture of modified silica having a modified surface by modifying the surface of the silica;
ii) impregnation of a magnesium dihalide into said modified silica;
iii) impregnation of titanium trichloride into said modified silica into which said magnesium dihalide is impregnated;
iv) offering of the primary activation sites through the impregnation of an alkyl aluminoxane into said modified silica into which said titanium trichloride is impregnated; and
v) impregnation of a titanium compound in order to offer the secondary activation sites on the surface where the primary activation sites are produced through the impregnation of said alkyl aluminoxane.

2. The method of manufacture of olefin polymerization catalysts of claim 1, wherein said alkyl aluminoxane used in the above Step vi) is shown in terms of the following Chemical Formulas 1 a and 1 b, and is one or more compounds selected from a group of compounds that is soluble in aromatic hydrocarbons but insoluble in aliphatic hydrocarbons:
[Chemical Formula 1a] R₂Al-O(-Al(R)-O)n-AlR ₂ 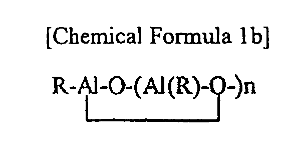
where R is an alkyl radical having 1 to 8 carbon atoms, and n is an integer between 1 and 100.

3. The method of manufacture of olefin polymerization catalyts of claim 2, wherein said alkyl aluminoxane used in the above Step iv) is methylaluminoxane or ethylaluminoxane that is insoluble in aliphatic hydrocarbons.

4. The method of manufacture of olefin polymerization catalysts of claim 1, wherein said titanium compound used in the above Step v) is a compound selected from a group of compounds that is shown in terms of the following Chemical Formula 2:
[Chemical Formula 2] (RO)ₙTiN₍₄₋ₙ₎
where R is a hydrocarbon having 1 to 20 carbon atoms, X is Cl, Br, I, or a pseudohalide, and n is an integer between 0 to 4.

5. The method of manufacture of olefin polymerization catalysts of claim 4, wherein said titanium compound is one or more compounds selected from tetrachlorotitanium, tetraethoxytitanium, tetramethoxytitanium, tetraisopropoxytitanium, chlorotriethoxytitanium, chlorotrimethoxytitanium, dichlorodimethoxytitanium, dichlorodiethoxytitanium, dichlorodiisopropoxytitanium, dichlorodibuthoxytitanium, trichloromethoxytitanium, and trichloroethoxytitanium.

6. The method of manufacture of olefin polymerization catalysts of claim 1, wherein said magnesium halide is magnesium chloride; said alkyl aluminoxane to be impregnated is a single compound of methylaluminoxane or ethylaluminoxane that is soluble in aromatic hydrocarbons but insoluble in aliphatic hydrocarbons, or a mixture thereof; said titanium compound to be impregnated is a single or mixed compound of tetrachlorotitanium, tetraethoxytitanium, and tetramethoxytitanium.

7. The method of manufacture of olefin polymerization catalysts of claim 6, wherein the amount of said magnesium dihalide to be impregnated is 1.0 to 5.0 mmole/g based on the amount of silica; the amount of said alkyl aluminoxane is in a range of 1.0 to 100 in terms of the Al/Mg role ratio; and the amount of said titanium compound is in a range of 1.0 to 50 in terms of the Al/Ti mole ratio.

8. The method of manufacture of olefin polymerization catalysts of claim 7, wherein said titanium trichloride is dissolved in ethanol or tetrahydrofuran; said alkyl aluminoxane is dissolved in toluene; and said titanium compound is dissolved in aliphatic hydrocarbons such as pentane, hexane, and other.

9. The olefin polymerization catalysts of claim 8, wherein said silica has an average particle diameter of 1 to 30 µm, a surface area of greater than 100 m²/g, and a pore volume of greater than 1.0 cc/g.

10. The olefin polymerization catalysts manufactured according to said method of manufacture of olefin polymerization catalysts of claim 1.

## Patentansprüche

1. Verfahren zur Herstellung von in Siliciumdioxid imprägnierten Olefinpolymerisations-Ziegler-Natta-Katalysatoren, umfassend die aufeinanderfolgenden Schritte:
i) Herstellung von modifiziertem Siliciumdioxid, das eine modifizierte Oberfläche hat, durch Modifizieren der Oberfläche des Siliciumdioxids;
ii) Imprägnierung eines Magnesiumdihalogenids in das modifizierte Siliciumdioxid;
iii) Imprägnierung von Titantrichlorid in das modifizierte Siliciumdioxid, in das das Magnesiumdihalogenid imprägniert ist;
iv) Präsentieren der primären Aktivierungsstellen durch die Imprägnierung eines Alkylaluminoxans in das modifizierte Siliciumdioxid, in welches das Titantrichlorid imprägniert ist, und
v) Imprägnierung einer Titanverbindung, um die sekundären Aktivierungsstellen an der Oberfläche zu präsentieren, an der die primären Aktivierungsstellen durch die Imprägnierung des Alkylaluminoxans produziert wurden.

2. Verfahren zur Herstellung von Olefinpolymerisationskatalysatoren gemäß Anspruch 1, wobei das Alkylaluminoxan, das in dem obigen Schritt iv) verwendet wird, durch die folgenden chemischen Formeln 1a und 1b dargestellt wird und eine Verbindung oder mehrere Verbindungen ist, ausgewählt aus der Gruppe von Verbindungen, die in aromatischen Kohlenwasserstoffen löslich sind, aber in aliphatischen Kohlenwasserstoffen unlöslich sind:
[chemische Formel 1a] **R₂Al-O(-Al(R)-O)n-AlR₂** 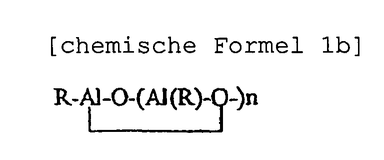
worin R ein Alkylrest mit 1 bis 8 Kohlenstoffatomen ist und n eine ganze Zahl zwischen 1 und 100 ist.

3. Verfahren zur Herstellung von Olefinpolymerisationskatalysatoren gemäß Anspruch 2, wobei das Alkylaluminoxan, das in dem obigen Schritt iv) verwendet wird, Methylaluminoxan oder Ethylaluminoxan ist, das in aliphatischen Kohlenwasserstoffen unlöslich ist.

4. Verfahren zur Herstellung von Olefinpolymerisationkatalysatoren gemäß Anspruch 1, wobei die Titanverbindung, die in dem obigen Schritt v) verwendet wird, eine Verbindung ist, die ausgewählt ist aus einer Gruppe von Verbindungen, die durch die folgende chemische Formel 2 dargestellt wird:
[chemische Formel 2] **(RO)ₙYiX₍₄₋ₙ₎**
worin R ein Kohlenwasserstoff mit 1 bis 20 Kohlenstoffatomen ist, X Cl, Br, I oder ein Pseudohalogenid ist und n eine ganze Zahl zwischen 0 und 4 ist.

5. Verfahren zur Herstellung von Olefinpolymerisationskatalysatoren gemäß Anspruch 4, wobei die Titanverbindung eine Verbindung oder mehrere Verbindungen ist, ausgewählt aus Tetrachlortitan, Tetraethoxytitan, Tetramethoxytitan, Tetraisopropoxytitan, Chlortriethoxytitan, Chlortrimethoxytitan, Dichlordimethoxytitan, Dichlordiethoxytitan, Dichlordiisopropoxytitan, Dichlordibutoxytitan, Trichlormethoxytitan und Trichlorethoxytitan.

6. Verfahren zur Herstellung von Olefinpolymerisationkatalysatoren gemäß Anspruch 1, wobei das Magnesiumhalogenid Magnesiumchlorid ist; das Alkylaluminoxan, das imprägniert werden soll, eine einzelne Verbindung von Methylaluminoxan oder Ethylaluminoxan ist, die in aromatischen Kohlenwasserstoffen löslich ist, in aliphatischen Kohlenwasserstoffen aber unlöslich ist, oder ein Gemisch davon ist; die Titanverbindung, die zu imprägnieren ist, eine einzelne oder gemischte Verbindung von Tetrachlortitan, Tetraethoxytitan und Tetramethoxytitan ist.

7. Verfahren zur Herstellung von Olefinpolymerisationskatalysatoren gemäß Anspruch 6, wobei die Menge des Magnesiumdihalogenids, die zu imprägnieren ist, 1,0 bis 5,0 mmol/g, bezogen auf die Menge an Siliciumdioxid, ist; die Menge des Alkylaluminoxans im Bereich von 1,0 bis 100 als Al/Mg-Molverhältnis ist und die Menge der Titanverbindung im Bereich von 1,0 bis 50 als Al/Ti-Molverhältnis ist.

8. Verfahren zur Herstellung von Olefinpolymerisationskatalysatoren gemäß Anspruch 7, wobei das Titantrichlorid in Ethanol oder Tetrahydrofuran gelöst wird; das Alkylaluminoxan in Toluol gelöst wird und die Titanverbindung in aliphatischen Kohlenwasserstoffen, zum Beispiel Pentan, Hexan und anderen, gelöst wird.

9. Olefinpolymerisationskatalysatoren gemäß Anspruch 8, wobei das Siliciumdioxid einen durchschnittlichen Partikeldurchmesser von 1 bis 30 µm, eine spezifische Oberfläche von größer als 100 m²/g und ein Porenvolumen von größer als 1,0 cm³/g hat.

10. Olefinpolymerisationkatalysatoren, die nach dem Verfahren zur Herstellung von Olefinpolymerisationskatalysatoren gemäß Anspruch 1 hergestellt sind.

## Revendications

1. Procédé de fabrication des catalyseurs de Ziegler-Natta imprégnés dans dioxyde de silicium pour une polymérisation oléfinique comprenant les étapes successives:
i) fabrication de dioxyde de silicium modifié ayant une surface modifiée en modifiant la surface du dioxyde de silicium;
ii) imprégnation d'un dihalogénure de magnésium dans le dioxyde de silicium;
iii) imprégnation du trichlorure de titane dans le dioxyde de silicium modifié, dans lequel le dihalogénure de magnésium est imprégné;
iv) présentation des premiers sites d'activation par l'imprégnation d'un aluminoxane d'alkyle dans le dioxyde de silicium modifié, dans lequel le trichlorure de titane est imprégné, et
v) imprégnation d'un composé de titane pour présenter des deuxièmes sites d'activation à la surface, à laquelle les premiers sites d'activation sont produits par l'imprégnation de l'aluminoxane d'alkyle.

2. Procédé de fabrication des catalyseurs pour une polymérisation oléfinique selon la revendication 1, dans lequel l'aluminoxane d'alkyle utilisé dans l'étape vi) ci-dessus est représenté par les formules chimiques suivantes 1a et 1b et est un ou plusieurs composés choisis parmi le groupe de composés solubles dans des hydrocarbures aromatiques, mais insolubles dans des hydrocarbures aliphatiques:
[formule chimique 1a] **R₂AL-O(-AL(R)-O)ₙ₋Alk₂** 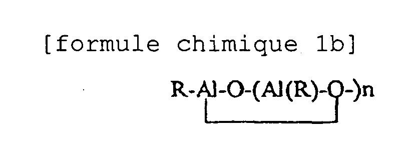
dans laquelle R représente un groupe alkyle ayant de 1 à 8 atomes de carbone et n représente un nombre entier entre 1 et 100.

3. Procédé de fabrication des catalyseurs pour une polymérisation oléfinique selon la revendication 2, dans lequel l'aluminoxane d'alkyle utilisé dans l'étape iv) au-dessus est l'aluminoxane de méthyl ou l'aluminoxane d'éthyle, qui est insoluble dans des hydrocarbures aliphatiques.

4. Procédé de fabrication des catalyseurs pour une polymérisation oléfinique selon la revendication 1, dans lequel le composé de titane utilisé dans l'étape v) au-dessus est un composé choisi parmi le groupe de composés qui sont représentés par la formule chimique 2 suivante:
[formule chimique 2] **(RO)_{N}TiX₍₄₋ₙ₎**
dans laquelle R représente un hydrocarbure ayant de 1 à 20 atomes de carbone, X représente Cl, Br, I ou un pseudohalogénure et n représente un nombre entier entre 0 et 4.

5. Procédé de fabrication des catalyseurs pour une polymérisation oléfinique selon la revendication 4, dans lequel le composé de titane est un composé ou plusieurs composés choisi(s) parmi le tétrachlorotitanium, tétraéthoxytitanium, tétraméthoxytitanium, tétraisopropoxytitanium, chlorotriéthoxytitanium, chlorotriméthoxytitanium, dichlorodiméthoxytitanium, dichlorodiéthoxytitanium, dichlorodiisopropoxxytitanium, dichlorodibutoxytitanium, trichlorométhoxytitanium et trichloroéthoxytitanium.

6. Procédé de fabrication des catalyseurs pour une polymérisation oléfinique selon la revendication 1, dans lequel le halogénure de magnésium est le chlorure de magnésium; l'aluminoxane d'alkyle à imprégner est un composé seul d'aluminoxane de méthyle ou d'aluminoxane d'éthyle qui est soluble dans des hydrocarbures aromatiques mais insoluble dans des hydrocarbures aliphatiques, ou un mélange de ceux-ci; le composé de titane à imprégner est un composé seul ou un mélange choisi parmi le tétrachlorotitanium, tétraéthoxytitanium et tétraméthoxytitanium.

7. Procédé de fabrication des catalyseurs pour une polymérisation oléfinique selon la revendication 6, dans lequel la quantité dudit dihalogénure de magnésium à imprégner est de 1,0 à 5,0 mmol/g sur la base de la quantité de dioxyde de silicium; la quantité dudit aluminoxane d'alkyle est dans la gamme de 1,0 à 100 en terme de rapport molaire Al/Mg et la quantité dudit composé de titane est dans la gamme de 1,0 à 50 en terme de rapport molaire Al/Ti.

8. Procédé de fabrication des catalyseurs pour une polymérisation oléfinique selon la revendication 7, dans lequel le trichlorure de titane est dissoudu dans de l'éthanol ou du tétrahydrofurane; l'aluminoxane d'alkyle est dissoudu dans du toluène et le composé de titane est dissoudu dans des hydrocarbures aliphatiques, par exemple le pentane, l'hexane et des autres.

9. Catalyseurs pour une polymérisation oléfinique selon la revendication 8, ou ledit dioxyde de silicium a un diamètre moyen de particules de 1 à 30 µm, une superficie spécifique de la surface supérieure à 100 m²/g et un volume de pores supérieurs à 1,0 cc/g.

10. Catalyseurs pour une polymérisation oléfinique fabriqués selon le procédé de fabrication des catalyseurs pour une polymérisation oléfinique selon la revendication 1.
